# EUROPEAN PATENT APPLICATION

(11) **EP 4 672 345 A1**
(43) Date of publication of application: **31.12.2025**
(21) Application number: 24899228.1
(22) Date of filing: 04.07.2024
(51) Int. Cl.: H01M 4/04, H01M 10/04, H01M 50/531

(54) **APPARATUS AND METHOD FOR MANUFACTURING ELECTRODE PLATE OF BATTERY CELL**

(30) Priority: 08.12.2023 CN 202311678823; 19.03.2024 CN 202410312214
(71) Applicant: Contemporary Amperex Technology Co., Limited, Ningde, Fujian 352100 (CN)
(72) Inventor: HU, Liangjin, Ningde, Fujian 352100 (CN); MA, Lin, Ningde, Fujian 352100 (CN)
(74) Representative: Gong, Jinping
(86) International application number: PCT/CN2024/103489
(87) International publication number: WO 2025/118577

(57) **Abstract**

Disclosed area a device and a method for manufacturing an electrode plate of a battery cell. The device includes: a tab die cutting unit; a first visual detecting unit for a first surface side of the electrode plate; an electrode plate slitting unit; a second visual detecting unit for a second surface side opposite to the first surface side of the electrode plate; a first deviation correcting unit upstream of the electrode plate slitting unit; and a second deviation correcting unit downstream of the electrode plate slitting unit.

## Description

### CROSS-REFERENCE TO RELATED APPLICATION

The present application claims priority to Chinese Patent Application No. 202410312214.6, entitled "DEVICE AND METHOD FOR MANUFACTURING ELECTRODE PLATE OF BATTERY CELL" and filed on March 19, 2024 and Chinese Patent Application No. 202311678823.5, entitled "DEVICE AND METHOD FOR MANUFACTURING POSITIVE ELECTRODE PLATE OF BATTERY CELL" and filed on December 08, 2023, which are incorporated herein by reference in their entireties.

### TECHNICAL FIELD

The present application relates to the field of batteries, and in particular, to a device and a method for manufacturing an electrode plate of a battery cell.

### BACKGROUND

Energy conservation and emission reduction is the key to sustainable development of the automobile industry. Electric vehicles have become an important part for the sustainable development of the automobile industry due to their energy-saving and environmental protection advantages. For the electric vehicles, the battery technology is an important factor in their development.

The electrode plates are important components constituting the battery cell. The electrode plates include a positive electrode plate and a negative electrode plate. Minimizing the manufacturing error of the electrode plates is beneficial to improve the quality of the battery cell.

### SUMMARY

In view of the above problems, the present application provides a device and a method for manufacturing an electrode plate of a battery cell.

In a first aspect, the present disclosure provides a device for manufacturing an electrode plate of a battery cell. The device includes: an incoming material traction mechanism, configured to guide an incoming material of the electrode plate to move from upstream to downstream according to a processing direction, the incoming material of the electrode plate is provided with a first edge and a second edge in a width direction perpendicular to a movement direction of the incoming material of the electrode plate; where, the device is further sequentially provided with the following components from upstream to downstream according to the movement direction of the incoming material of the electrode plate: a first deviation correcting mechanism, configured to adjust a position of the incoming material of the electrode plate relative to a tab cutting part of a die cutting mechanism in the width direction; the die cutting mechanism, including the tab cutting part configured to cut tabs on the incoming material of the electrode plate; a first visual detecting mechanism, configured to acquire a first image of a first surface of the incoming material of the electrode plate after the tabs are cut; a second deviation correcting mechanism, configured to adjust a position of the incoming material of the electrode plate relative to a slitting and cutting part of a slitting mechanism in the width direction; the slitting mechanism, including the slitting and cutting part configured to slit and cut the incoming material of the electrode plate into a first electrode plate and a second electrode plate, the first electrode plate including the first edge, and the second electrode plate including the second edge; a second visual detecting mechanism, configured to acquire a second image of a second surface of the first electrode plate and the second electrode plate opposite to the first surface; and a control unit, configured to control the first deviation correcting mechanism and the second deviation correcting mechanism according to the first image and the second image.

In a second aspect, the present disclosure provides a method for manufacturing an electrode plate of a battery cell. The method includes: respectively cutting first tabs and second tabs at the first edge and the second edge opposite to each other in the width direction perpendicular to the movement direction of the incoming material of the electrode plate; acquiring the first image of the first surface of the incoming material of the electrode plate after the tab cutting is completed to determine a first set of dimensional parameters; slitting the incoming material of the electrode plate into the first electrode plate including the first edge and the second electrode plate including the second edge in the width direction of the incoming material of the electrode plate after the tab cutting is completed; acquiring the second image of the second surface of the first electrode plate and the second electrode plate to determine a second set of dimensional parameters, the second surface being opposite to the first surface; adjusting cutting positions of the first tabs and the second tabs according to the first set of dimensional parameters and the second set of dimensional parameters; and adjusting slitting positions of the first electrode plate and the second electrode plate according to the first set of dimensional parameters and the second set of dimensional parameters.

According to the present application, the cutting positions of the tabs and the slitting positions of the electrode plates are adjusted through closed-loop feedback control, such that the manufacturing error of the electrode plates is reduced, which is beneficial to improve the quality of a battery cell.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and are not to be construed as limiting the scope of the present application. Furthermore, the same reference numerals in all the drawings denote identical components. In the drawings:
FIG. 1 is a top view of a device for manufacturing an electrode plate according to some embodiments of the present application;
FIG. 2 is a schematic diagram showing the processing of an incoming material of an electrode plate according to some embodiments of the present application;
FIG. 3 is a schematic diagram showing processing of an incoming material of an electrode plate according to some other embodiments of the present application;
FIG. 4 is a flowchart of a method for manufacturing an electrode plate according to some embodiments of the present application; and
FIG. 5 is a schematic structural diagram of a device for manufacturing an electrode plate according to some embodiments of the present application.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the protection scope of the present application.

Unless otherwise defined, all technical and scientific terms used herein have the same meaning as commonly understood by those skilled in the art to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "a plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

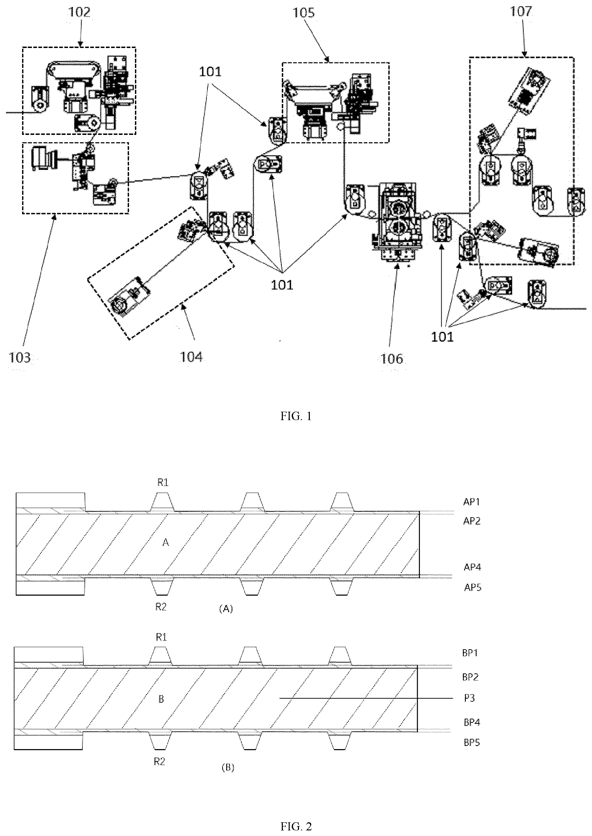

Referring to FIG. 1, FIG. 1 is a top view of a device for manufacturing an electrode plate according to some embodiments of the present application.

According to some embodiments, an incoming material of the electrode plate moves from upstream to downstream in a processing direction under the traction of an incoming material traction mechanism (not shown). The incoming material traction mechanism guides the incoming material of the electrode plate to move from upstream to downstream according to the processing direction. The incoming material of the electrode plate is provided with a first edge and a second edge in a width direction perpendicular to a movement direction of the incoming material of the electrode plates.

According to some embodiments, the device for manufacturing an electrode plate is further sequentially provided with the following components from upstream to downstream according to the movement direction of the incoming material of the electrode plate: a first deviation correcting mechanism 102, a die cutting mechanism 103, a first visual detecting mechanism 104, a second deviation correcting mechanism 105, a slitting mechanism 106, a second visual detecting mechanism 107, and a control unit (not shown).

The incoming material traction mechanism includes a plurality of upper and lower roller pairs driven by motors from upstream to downstream, such that the incoming material of the electrode plate moves from upstream to downstream according to the processing direction.

The first deviation correcting mechanism 102 adjusts the position of the incoming material of the electrode plate relative to a tab cutting part of the die cutting mechanism in the width direction perpendicular to the movement direction of the incoming material of the electrode plate.

The die cutting mechanism 103 includes the tab cutting part configured to cut tabs on the incoming material of the electrode plate.

The position of the tab cutting part of the die cutting mechanism 103 is fixed. The first deviation correcting mechanism 102 adjusts the position of the incoming material of the electrode plate relative to the tab cutting part of the die cutting mechanism. According to an ideal design value, the position, adjusted by the first deviation correcting mechanism 102, of the incoming material of the electrode plate relative to the tab cutting part of the die cutting mechanism enables the dimension of the first tab obtained by cutting to be consistent with the dimension of the second tab.

The first visual detecting mechanism 104 acquires a first image of a first surface of the incoming material of the electrode plate after the tabs are cut.

The second deviation correcting mechanism 105 adjusts the position of the incoming material of the electrode plate relative to a slitting and cutting part of the slitting mechanism in the width direction perpendicular to the movement direction of the incoming material of the electrode plate.

The slitting mechanism 106 includes the slitting and cutting part configured to slit and cut the incoming material of the electrode plate into a first electrode plate and a second electrode plate.

The second visual detecting mechanism 107 acquires a second image of a second surface of the first electrode plate and the second electrode plate opposite to the first surface.

The control unit (not shown) controls the first deviation correcting mechanism 102 and the second deviation correcting mechanism 105 according to the first image and the second image.

As shown in FIG. 1, the device for manufacturing an electrode plate is further provided with a plurality of roller assemblies 101 from upstream to downstream according to the movement direction of the incoming material of the electrode plate, where the contact surfaces of the roller assemblies 101 and the incoming material of the electrode plate may be curved surfaces, and in a working state, the roller assemblies 101 may rotate from upstream to downstream to drive the incoming material of the electrode plate to move from upstream to downstream smoothly according to the processing direction, without bending or dropping, which affects the processing.

According to some embodiments, an upper computer (industrial personal computer) serves as the control unit.

According to some embodiments, the control unit calculates, according to the pictures taken by the first visual detecting mechanism 104 and the second visual detecting mechanism 107, various dimensional parameters that characterize the dimension of an active material area, the dimension of an insulating material area, the dimension of the tabs of the electrode plate (e.g., the positive electrode plate) or the like. The control unit calculates a deviation correction amount of the first deviation correcting mechanism 102 and a deviation correction amount of the second deviation correcting mechanism 105 based on various dimensional parameters. Moreover, the control unit sends the deviation correction amounts to the first deviation correcting mechanism 102 and the second deviation correcting mechanism 105, respectively.

According to some embodiments, the control unit is configured to control the first deviation correcting mechanism through closed-loop feedback according to the first image and the second image so as to minimize a difference between an insulating material area of the first electrode plate and an insulating material area of the second electrode plate.

According to some embodiments, the control unit is configured to control the second deviation correcting mechanism through closed-loop feedback according to the first image and the second image so as to minimize a difference between an active material area of the first electrode plate and an active material area of the second electrode plate.

According to some embodiments, the control unit is configured to determine a first deviation correction amount according to the difference amount between the insulating material area of the first electrode plate and the insulating material area of the second electrode plate. The first deviation correcting mechanism adjusts the position of the incoming material of the electrode plate relative to the tab cutting part of the die cutting mechanism according to the first deviation correction amount.

According to some embodiments, the control unit is configured to determine a second deviation correction amount according to the difference amount between the active material area of the first electrode plate and the active material area of the second electrode plate. The second deviation correcting mechanism adjusts the position of the incoming material of the electrode plate relative to the slitting and cutting part of the slitting mechanism according to the second deviation correction amount.

According to some embodiments, the control unit calculates, according to the pictures taken by the first visual detecting mechanism 104 and the second visual detecting mechanism 107, various dimensional parameters that characterize the dimension of an active material area, the dimension of an area where the tabs overlap with the active material area (i.e., a partial area of the tab covered with an active material, hereinafter referred to as a step area), the dimension of the tabs of the electrode plate (e.g., the negative electrode plate) or the like. The control unit calculates a deviation correction amount of the first deviation correcting mechanism 102 and a deviation correction amount of the second deviation correcting mechanism 105 based on various dimensional parameters. Moreover, the control unit sends the deviation correction amounts to the first deviation correcting mechanism 102 and the second deviation correcting mechanism 105, respectively.

According to some embodiments, the control unit is configured to control the first deviation correcting mechanism through closed-loop feedback according to the first image and the second image so as to minimize a difference between a step area of the first electrode plate and a step area of the second electrode plate.

According to some embodiments, the control unit is configured to control the second deviation correcting mechanism through closed-loop feedback according to the first image and the second image so as to minimize a difference between an electrode width dimension of the first electrode plate and an electrode width dimension of the second electrode plate.

According to some embodiments, the control unit is configured to determine a first deviation correction amount according to the difference amount between the step area of the first electrode plate and the step area of the second electrode plate. The first deviation correcting mechanism adjusts the position of the incoming material of the electrode plate relative to the tab cutting part of the die cutting mechanism according to the first deviation correction amount.

According to some embodiments, the control unit is configured to determine a second deviation correction amount according to the difference amount between the electrode width dimension of the first electrode plate and the electrode width dimension of the second electrode plate. The second deviation correcting mechanism adjusts the position of the incoming material of the electrode plate relative to the slitting and cutting part of the slitting mechanism according to the second deviation correction amount.

Referring to FIG. 2, FIG. 2 is a schematic diagram showing the processing of an incoming material of an electrode plate according to some embodiments of the present application.

According to some embodiments, for example, a first surface (e.g., surface A shown in FIG. 2) and a second surface (e.g., surface B shown in FIG. 2) of an incoming material of the electrode plate for manufacturing a positive electrode plate each include, from a first edge to a second edge, a first metal film area (e.g., an uppermost area in FIG. 2), a first insulating material area (e.g., a hatched area proximal to the first edge side in FIG. 2), an active material area (e.g., a hatched area in the middle of FIG. 2), a second insulating material area (e.g., a hatched area proximal to the second edge side in FIG. 2), and a second metal film area (e.g., a lowermost area in FIG. 2).

The tab cutting part includes: a first cutting head configured to cut first tabs (e.g., R1 shown in FIG. 2) in the first metal film area and the first insulating material area; and a second cutting head configured to cut second tabs (e.g., R2 shown in FIG. 2) in the second metal film area and the second insulating material area.

The control unit determines, according to the first image and the second image, a distance K1 (a distance from AP1 to AP2) from a root of the first tab on the first surface to the active material area, a distance N1 (a distance from BP1 to BP2) from a root of the first tab on the second surface to the active material area, a distance K2 (a distance from AP5 to AP4) from a root of the second tab on the first surface to the active material area, and a distance N2 (a distance from BP5 to BP4) from a root of the second tab on the second surface to the active material area, and controls the first deviation correcting mechanism to adjust the position of the incoming material of the electrode plate relative to the first cutting head and the second cutting head in the width direction so as to minimize a difference between a sum of the distance K1 and the distance N1 and a sum of the distance K2 and the distance N2.

According to some embodiments, the control unit determines, according to the first image and the second image, a width M3 of an active material area of the first surface of the first electrode plate, a width M4 of an active material area of the first surface of the second electrode plate, a width M1 of an active material area of the second surface of the first electrode plate, and a width M2 of an active material area of the second surface of the second electrode plate. Moreover, the control unit controls the second deviation correcting mechanism to adjust the position of the incoming material of the electrode plate relative to the slitting and cutting part in the width direction so as to minimize a difference between a sum of the width M3 and the width M1 and a sum of the width M4 and the width M2.

According to some embodiment, a timing at which the first visual detecting mechanism acquires the first image, a timing at which the second visual detecting mechanism acquires the second image, and the setting of a moving speed of the incoming material of the electrode plate are set to enable a detection point of the first visual detecting mechanism and a detection point of the second visual detecting mechanism to correspond to two opposite surfaces of a same position on the incoming material of the electrode plate.

According to some embodiments, both surface sides (A-surface side and B-surface side) of a conductive metal foil (e.g., aluminum foil) are coated with an active material and an insulating material. The central area of the metal foil is coated with the active material. The active material participates in the electrochemical reaction in the battery, and coating a large area with the active material as much as possible is beneficial to improve the power supply efficiency of the battery. Both sides of the active material area are coated with the insulating material. The active material area is sometimes referred to as a film area. A partial area of the insulating material area from the tab root to the boundary of the active material area is sometimes referred to as an AT area. According to some embodiments, the active material appears black, distinct from the color of the insulating material. For example, according to some embodiments, the insulating material contains a ceramic powder that appears white. In FIG. 2, the central hatched area between AP2 and AP4 represents the active material area, the hatched areas on both sides of the active material area represent insulating material areas, and the tab areas of the electrode plate before and after die cutting are shown on the outer sides of the insulating material areas.

As shown in FIG. 2, first tabs R1 and second tabs R2 are shown on the upper and lower portions of the electrode plate, and a slitting line that slits the electrode plate into the first electrode plate and the second electrode plate is shown at a position right in the middle of the electrode plate in the width direction. FIG. 2(A) shows a first surface side (hereinafter, referred to as A-surface side) of the electrode plate, and FIG. 2(B) shows a second surface side (hereinafter, referred to as B-surface side) of the electrode plate opposite to the first surface side. The slitting line is shown as P3 in FIG. 2(B).

According to some embodiments, the incoming material traction mechanism is implemented by upper and lower roller pairs driven by motors. The electrode plate is clamped by upper and lower roller pairs driven by the motors, and the electrode plate moves along with the rotational movement of the upper and lower roller pairs.

According to some embodiments, the first tabs R1 and the second tabs R2 are separately cut at the upper and lower portions of the electrode plate by a die cutting unit.

According to some embodiments, the electrode plate is slitted into the first electrode plate and the second electrode plate at a position right in the middle of the electrode plate in the width direction by a slitting unit.

In the ideal case of no manufacturing errors, the various parameters of the first electrode plate and the second electrode plate are perfectly identical. For example, the dimension of the tabs, the width of the insulating film, and the width of the active material film of the first electrode plate are all completely identical to those of the second electrode plate.

In an ideal case of no manufacturing errors, various parameters of the A-surface side of the electrode plate and the B-surface side of the electrode plate are also completely identical. For example, the dimension of the tabs, the width of the insulating film, and the width of the active material film of the electrode plate on the A-surface side are also completely identical to the dimension of the tabs, the width of the insulating film, and the width of the active material film of the electrode plate on the B-surface side.

However, in actual production, manufacturing errors are objectively unavoidable. The present disclosure dynamically adjusts the positions of the electrode plates in the width method through closed-loop feedback control to minimize the difference between the insulating material area of the first electrode plate and the insulating material area of the second electrode plate caused by manufacturing errors, and to minimize the difference between the active material area of the first electrode plate and the active material area of the second electrode plate.

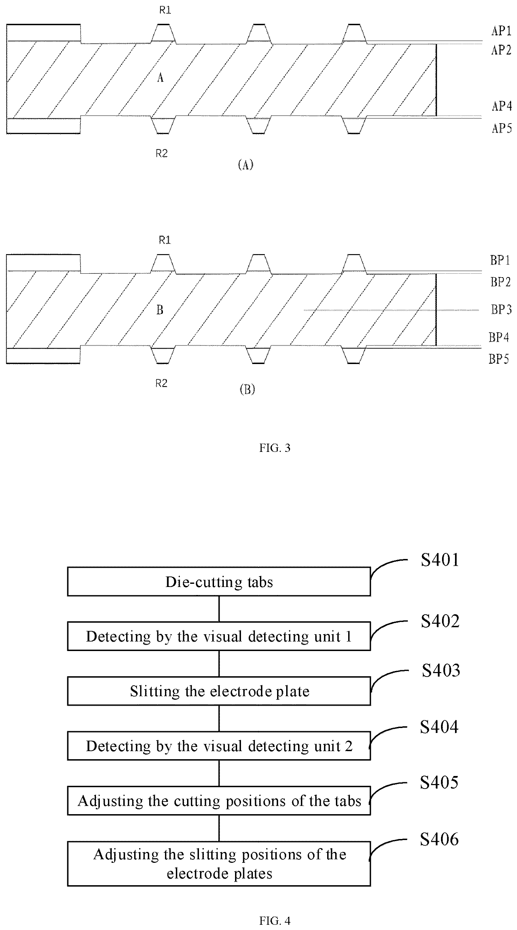

Referring to FIG. 3, FIG. 3 is a schematic diagram showing the processing of an incoming material of an electrode plate according to some other embodiments of the present application.

According to some embodiments, for example, the first surface (e.g., surface A shown in FIG. 3) and the second surface (e.g., surface B shown in FIG. 3) of an incoming material of the electrode plate for manufacturing a negative electrode plate each include, from a first edge to a second edge, a first metal film area (e.g., an uppermost area in FIG. 3), an active material area (e.g., a middle hatched area in FIG. 3), and a second metal film area (e.g., a lowermost area in FIG. 3).

The tab cutting part includes: a first cutting head configured to cut first tabs (e.g., R1 shown in FIG. 3) in the first metal film area and the active material area; and a second cutting head configured to cut second tabs (e.g., R2 shown in FIG. 3) in the second metal film area and the active material area.

The control unit determines, according to the first image and the second image, a distance H_{A1} (a distance from AP1 to AP2) from a first boundary of the active material area on the first surface to a root of the first tab, a distance H_{B1} (a distance from BP1 to BP2) from a first boundary of the active material area on the second surface to a root of the first tab, a distance H_{A2} (a distance from AP4 to AP5) from a second boundary of the active material area on the first surface to a root of the second tab, and a distance H_{B2} (a distance from BP4 to BP5) from a second boundary of the active material area on the second surface to a root of the second tab, and controls the first deviation correcting mechanism to adjust the position of the incoming material of the electrode plate relative to the first cutting head and the second cutting head in the width direction so as to minimize a difference between a sum of the distance H_{A1} and the distance H_{B1} and a sum of the distance H_{A2} and the distance H_{B2}.

According to some embodiments, the control unit determines, according to the second image, an electrode width dimension M of the second surface of the first electrode plate (a distance from the root BP2 of the first tab to the slitting line BP3) and an electrode width dimension N of the second surface of the second electrode plate (a distance from the slitting line BP3 to the root BP4 of the second tab). Moreover, the control unit controls the second deviation correcting mechanism to adjust the position of the incoming material of the electrode plate relative to the slitting and cutting part in the width direction so as to minimize a difference between the width M and the width N.

According to some embodiment, a timing at which the first visual detecting mechanism acquires the first image, a timing at which the second visual detecting mechanism acquires the second image, and the setting of a moving speed of the incoming material of the electrode plate are set to enable a detection point of the first visual detecting mechanism and a detection point of the second visual detecting mechanism to correspond to two opposite surfaces of a same position on the incoming material of the electrode plate.

According to some embodiments, both surface sides (A-surface side and B-surface side) of a conductive metal foil (e.g., copper foil) are coated with an active material. The central area of the metal foil is coated with the active material. The active material participates in the electrochemical reaction in the battery, and coating a large area with the active material as much as possible is beneficial to improve the power supply efficiency of the battery. The active material area is sometimes referred to as a film area. According to some embodiments, the active material appears black, distinct from the color of the metal foil. In FIG. 3, the central hatched area between AP2 and AP4 represents the active material area, and the central hatched area between BP2 and BP4 also represents the active material area, and the tab areas of the electrode plates before and after die cutting are shown on both sides.

As shown in FIG. 3, first tabs R1 and second tabs R2 are shown on the upper and lower portions of the electrode plate, and a slitting line that slits the electrode plate into the first electrode plate and the second electrode plate is shown at a position right in the middle of the electrode plate in the width direction. FIG. 3(A) shows a first surface side (hereinafter, referred to as A-surface side) of the electrode plate, and FIG. 3(B) shows a second surface side (hereinafter, referred to as B-surface side) of the electrode plate opposite to the first surface side. The slitting line is shown as BP3 in FIG. 3(B).

According to some embodiments, the incoming material traction mechanism is implemented by upper and lower roller pairs driven by motors. The electrode plate is clamped by upper and lower roller pairs driven by the motors, and the electrode plate moves along with the rotational movement of the upper and lower roller pairs.

According to some embodiments, the first tabs R1 and the second tabs R2 are separately cut at the upper and lower portions of the electrode plate by a die cutting unit.

According to some embodiments, the electrode plate is slitted into the first electrode plate and the second electrode plate at a position right in the middle of the electrode plate in the width direction by a slitting unit.

In the ideal case of no manufacturing errors, the various parameters of the first electrode plate and the second electrode plate are perfectly identical. For example, the dimension of the tabs and the width of the active material film of the first electrode plate are completely identical to the dimension of the tabs and the width of the active material film of the second electrode plate.

In an ideal case of no manufacturing errors, various parameters of the A-surface side of the electrode plate and the B-surface side of the electrode plate are also completely identical. For example, the dimension of the tabs and the width of the active material film of the electrode plate on the A-surface side are also completely identical to the dimension of the tabs and the width of the active material film of the electrode plate on the B-surface side.

However, in actual production, manufacturing errors are objectively unavoidable. The present disclosure dynamically adjusts the positions of the electrode plates in the width method through closed-loop feedback control to minimize the difference between the step area of the first electrode plate and the step area of the second electrode plate caused by manufacturing errors, and to minimize the difference between the electrode width dimension of the first electrode plate and the electrode width dimension of the second electrode plate.

Referring to FIG. 4, FIG. 4 is a flowchart of a method for manufacturing an electrode plate according to some embodiments of the present application.

According to some embodiments, both surface sides of a conductive metal foil (e.g., aluminum foil) are coated with an active material and an insulating material to prepare an incoming material of an electrode plate (e.g., a positive electrode plate) in advance. The active material area and the insulating material area are preferably symmetrical with respect to a center line in the width direction of the metal foil. The arrangement of the active material areas and the insulating material areas on both surface sides is preferably the same. The active material areas on both surface sides preferably have the same width and are both located in the middle area of the metal foil. The insulating material areas on both surface sides are respectively located on the upper side and the lower side of the active material areas, the insulating material areas on both surface sides have the same width, and the insulating material area on the upper side and the insulating material area on the lower side have the same width.

According to some embodiments, the method for manufacturing an electrode plate of a battery cell of the present application begins with S401.

According to some embodiments, in S402, a first tab and a second tab are respectively cut at the first edge and the second edge opposite to each other in the width direction perpendicular to the movement direction of the incoming material of the electrode plate.

According to some embodiments, in S403, the first image of the first surface of the incoming material of the electrode plate after the tab cutting is completed is acquired to determine a first set of dimensional parameters.

According to some embodiments, in S404, the incoming material of the electrode plate is slitted into the first electrode plate including the first edge and the second electrode plate including the second edge in the width direction of the incoming material of the electrode plate after the tab cutting is completed.

According to some embodiments, in S405, the second image of the second surface of the first electrode plate and the second electrode plate is acquired to determine a second set of dimensional parameters, the second surface being opposite to the first surface.

According to some embodiments, in S406, cutting positions of the first tabs and the second tabs are adjusted according to the first set of dimensional parameters and the second set of dimensional parameters.

According to some embodiments, in S407, slitting positions of the first electrode plate and the second electrode plate are adjusted according to the first set of dimensional parameters and the second set of dimensional parameters.

The method for manufacturing an electrode plate of a battery cell of the present application ends in S408.

According to some embodiments, the first surface and the second surface of the incoming material of the electrode plate each include, from the first edge to the second edge, a first metal film area, a first insulating material area, an active material area, a second insulating material area, and a second metal film area. The first set of dimensional parameters includes: a distance K1 from a root of the first tab on the first surface to the active material area and a distance K2 from a root of the second tab on the first surface to the active material area. The second set of dimensional parameters includes: a distance N1 from a root of the first tab on the second surface to the active material area and a distance N2 from a root of the second tab on the second surface to the active material area. Adjusting the cutting positions of the first tabs and the second tabs according to the first set of dimensional parameters and the second set of dimensional parameters includes: minimizing a difference between a sum of the distance K1 and the distance N1 and a sum of the distance K2 and the distance N2 by adjusting the cutting positions of the tabs.

According to some embodiments, minimizing the difference between the sum of the distance K1 and the distance N1 and the sum of the distance K2 and the distance N2 by adjusting the cutting positions includes: determining a first deviation correction amount according to one quarter of the difference between the sum of the distance K1 and the distance N1 and the sum of the distance K2 and the distance N2; and adjusting, by the first deviation correcting mechanism, the position of the incoming material of the electrode plate relative to the tab cutting part of the die cutting mechanism according to the first deviation correction amount.

According to some embodiments, the second set of dimensional parameters further includes: a width M1 of an active material area of the second surface of the first electrode plate, a width M2 of an active material area of the second surface of the second electrode plate, an electrode width L1 of the second surface of the first electrode plate, and an electrode width L2 of the second surface of the second electrode plate. Adjusting the slitting positions of the first electrode plate and the second electrode plate according to the first set of dimensional parameters and the second set of dimensional parameters includes: determining a width M3 of an active material area of the first surface of the first electrode plate according to a difference value obtained by subtracting K1 from L1; determining a width M4 of an active material area of the first surface of the second electrode plate according to a difference value obtained by subtracting K2 from L2; and minimizing a difference between a sum of the width M3 and the width M1 and a sum of the width M4 and the width M2 by adjusting the slitting positions of the electrode plates.

According to some embodiments, minimizing the difference between the sum of the width M3 and the width M1 and the sum of the width M4 and the width M2 by adjusting the slitting positions of the electrode plates includes: determining a second deviation correction amount according to one quarter of the difference between the sum of the width M3 and the width M1 and the sum of the width M4 and the width M2; and adjusting, by the second deviation correcting mechanism, the position of the incoming material of the electrode plate relative to the slitting and cutting part of the slitting mechanism according to the second deviation correction amount.

According to some embodiments, the first visual detecting mechanism is controlled to acquire the first image at a first time; a movement time required for the incoming material of the electrode plate to move from a position corresponding to the first visual detecting mechanism to a position corresponding to the second visual detecting mechanism is determined; a second time is determined according to the first time and the movement time; and the second visual detecting mechanism is controlled to acquire the second image at the second time.

According to some embodiments, the first tabs R1 and the second tabs R2 are separately cut at the upper and lower portions of the electrode plate by a die cutting unit. For example, the die cutting unit may be a laser die cutting unit or any other suitable die cutting unit.

According to some embodiments, both sides (A-surface side and B-surface side shown in FIG. 2) of the electrode plate are detected by different visual detecting units.

For example, one or more of the following are detected on the first surface side (A-surface side) by the first visual detecting unit: the position of the root AP1 of the first tab R1, the position of the boundary line AP2 between the upper insulating material area and the active material area, the position of the boundary line AP4 between the active material area and the lower insulating material area, and the position of the rootAP5 of the second tab R2.

For example, one or more of the following are detected on the second surface side (B-surface side) by the second visual detecting unit: the position of the root BP1 of the first tab R1, the position of the boundary line BP2 between the upper insulating material area and the upper active material area, the position of the slitting line P3 between the first electrode plate and the second electrode plate, the position of the boundary line BP4 between the lower active material area and the lower insulating material area, and the position of the root BP5 of the second tab R2.

According to some embodiments, the electrode plate is slitted into the first electrode plate and the second electrode plate at a position right in the middle of the electrode plate in the width direction by a slitting unit. The slitting unit is, for example, a mechanical slitting knife or any other suitable slitting tool. For example, it is also feasible to use laser slitting for the slitting unit, but the cost of using laser slitting is higher than that of using a mechanical slitting knife.

According to some embodiments, the first visual detecting unit is upstream of the slitting unit, and the second visual detecting unit is downstream of the slitting unit. For example, the first visual detecting unit detects the electrode plate at a timing T1. The spatial position of the central point of the electrode plate area in the visual field of the first visual detecting unit is represented by P1. Preferably, the electrode plate moves at a uniform speed V. At a timing T2 after a lapse of a period ΔT, the second visual detecting unit detects the electrode plate. The spatial position of the central point of the electrode plate area in the visual field of the second visual detecting unit is represented by P2. A timing T1 at which the first visual detecting unit performs detection, a timing T2 at which the second visual detecting unit performs detection, a speed V at which the electrode plate moves, a spatial position P1 at a detection point of the first visual detecting unit, and a spatial position P2 at a detection point of the second visual detecting unit satisfy (T2 - T1) × V = (P2 - P1). Although it is illustrated that the detection point of the first visual detecting unit may be represented by a central point of the field of view area of the first visual detecting unit, and the detection point of the second visual detecting unit may be characterized by a central point of the field of view area of the second visual detecting unit; however, the detection point of the first visual detecting unit and the detection point of the second visual detecting unit may be characterized by any other point defined in advance within their field of view. Such an arrangement is preferable for making the detection position of the first visual detecting unit on the electrode plate and the subsequent detection position of the second visual detecting unit on the electrode plate correspond to two opposite surfaces of the same position of the electrode plate.

The specific manner of enabling the detection position of the first visual detecting unit on the electrode plate and the subsequent detection position of the second visual detecting unit on the electrode plate to correspond to the two opposite surfaces of the same position of the electrode plate is not limited to the specific manner exemplified above. For the electrode plate used for a specific type of a battery cell, the number of tabs of the electrode plate, the dimension of the tabs of the electrode plate, the shape of the tabs of the electrode plate, and the distance between the respective tabs are preset. The speed at which the electrode plate moves during the manufacturing process is also preset. The incoming material of the electrode plate is marked with marks, and each mark indicates the end of an electrode plate for a previous battery cell and the beginning of an electrode plate for a next battery cell. Based on the detection of a mark and the time and the speed of movement of the electrode plate since a previous mark is detected, the position on the electrode plate corresponding to the detection point of the first visual detecting unit and the position on the electrode plate corresponding to the detection point of the second visual detecting unit at each moment can be expected, and the position on the electrode plate can be expressed, for example, as the distance from the recently detected mark or, for example, as the distance from the nearest tab that has just passed. Based on such a prejudgment, the detection timing of the first visual detecting unit and the detection timing of the second visual detecting unit can be set such that the detection position of the first visual detecting unit on the electrode plate and the subsequent detection position of the second visual detecting unit on the electrode plate correspond to two opposite surfaces of the same position of the electrode plate. For example, by satisfying (T2 - T1) × V = (P2 - P1) as above, the detection position of the first visual detecting unit on the electrode plate and the subsequent detection position of the second visual detecting unit on the electrode plate correspond to two opposite surfaces of the same position of the electrode plate.

According to some embodiments, two deviation correcting units are arranged to respectively correct the deviation with respect to the difference between the insulating material area of the first electrode plate and the insulating material area of the second electrode plate and the difference between the active material area of the first electrode plate and the active material area of the second electrode plate.

For example, with the first deviation correcting unit, the difference between the insulating material area of the first electrode plate and the insulating material area of the second electrode plate is minimized through closed-loop feedback control based on the detection results of the first visual detecting unit and the second visual detecting unit. According to some embodiments, the first deviation correcting unit performs closed-loop feedback control with a part (e.g., one quarter) of the difference amount between the insulating material area of the first electrode plate and the insulating material area of the second electrode plate as a deviation correction amount E to minimize the difference between the insulating material area of the first electrode plate and the insulating material area of the second electrode plate. Taking one quarter of the difference amount between the insulating material area of the first electrode plate and the insulating material area of the second electrode plate as the deviation correction amount E is merely an example. In other embodiments, a deviation correction amount F may also be, for example, 1/2 to 1/8 (e.g., 1/2, 1/3, 1/4, 1/5, 1/6, 1/7, or 1/8) of the difference amount between the insulating material area of the first electrode plate and the insulating material area of the second electrode plate.

For example, with the second deviation correcting unit, the difference between the active material area of the first electrode plate and the active material area of the second electrode plate is minimized through closed-loop feedback control based on the detection results of the first visual detecting unit and the second visual detecting unit. According to some embodiments, the second deviation correcting unit performs closed-loop feedback control with a part (e.g., one quarter) of the difference amount between the active material area of the first electrode plate and the active material area of the second electrode plate as the deviation correction amount F to minimize the difference between the active material area of the first electrode plate and the active material area of the second electrode plate. Taking one quarter of the difference amount between the active material area of the first electrode plate and the active material area of the second electrode plate as the deviation correction amount F is merely an example. In other embodiments, the deviation correction amount F may also be, for example, 1/2 to 1/8 (e.g., 1/2, 1/3, 1/4, 1/5, 1/6, 1/7, or 1/8) of the difference amount between the active material area of the first electrode plate and the active material area of the second electrode plate.

According to some embodiments, based on the result of the detection on the first surface side of the electrode plate by the first visual detecting unit, a distance from the root AP1 of the first tab R1 to the root AP5 of the second tab R2 is represented as an electrode plate width L, a distance from the rootAP1 of the first tab R1 to the boundary line AP2 between the upper insulating material area and the upper active material area is represented as an upper AT width K1 on A-surface side, a width M of the active material area is represented as a distance from the boundary line AP2 between the upper insulating material area and the upper active material area to the boundary line AP4 between the lower active material area and the lower insulating material area, and a distance from the root AP5 of the second tab R2 to the boundary line AP4 between the active material area and the lower insulating material area is represented as a lower AT width K2 on A-surface side. These values satisfy the relationship of L = K1 + M + K2.

According to some embodiments, based on the result of the detection on the second surface side of the electrode plate by the second visual detecting unit, a width L1 of the first electrode plate is represented as a distance from the root BP1 of the first tab R1 to the slitting line P3 between the first electrode plate and the second electrode plate, a width L2 of the second electrode plate is represented as a distance from the slitting line P3 between the first electrode plate and the second electrode plate to the root BP5 of the second tab R2, a width M1 of the upper active material area is represented as a distance from the boundary line BP2 between the upper insulating material area and the upper active material area to the slitting line P3 between the first electrode plate and the second electrode plate, a width M2 of the lower active material area is represented as a distance from the slitting line P3 between the first electrode plate and the second electrode plate to the boundary line BP4 between the lower active material area and the lower insulating material area, a width from the root BP1 of the first tab R1 to the boundary line BP2 between the upper insulating material area and the upper active material area is represented as N1, and a distance from the boundary line BP4 between the lower active material area and the lower insulating material area to the root BP5 of the second tab R2 is represented as N2. These values satisfy the relationships of L1 = M1 + N1 and L2 = M2 + N2.

According to some embodiments, the first deviation correcting unit performs closed-loop feedback control on the position of the electrode plate in the width direction based on the deviation correction amount E = ((K1 + N1) - (K2 + N2))/4. The deviation correction amount E = ((K1 + N1) - (K2 + N2))/4 characterizes one quarter of the difference amount between the insulating material area of the first electrode plate and the insulating material area of the second electrode plate.

According to some embodiments, the second deviation correcting unit performs closed-loop feedback control on the position of the electrode plate in the width direction based on the deviation correction amount F = ((M1 + M3) - (M2 + M4))/4, where M3 = L1 - K1 and M4 = L2 - K2. The deviation correction amount F = ((M1 + M3) - (M2 + M4))/4 characterizes one quarter of the difference amount between the active material area of the first electrode plate and the active material area of the second electrode plate, where M3 corresponds to the width of the upper active material area on A-surface side, and M4 corresponds to the width of the lower active material area on A-surface side. Since the electrode plate has not been slitted and cut into the first electrode plate and the second electrode plate at the time when the first visual detecting unit detects A-surface side of the electrode plate, the first visual detecting unit cannot detect the width of the upper active material area on A surface side and the width of the lower active material area on A-surface side. In an ideal case where manufacturing errors are excluded, A-surface side and B-surface side of the electrode plate have the identical structure, and the first electrode plate and the second electrode plate obtained by slitting and cutting also have the identical structure (up-down symmetry). Therefore, the present disclosure indirectly estimates the width M3 of the upper active material area on A-surface side and the width M4 of the lower active material area on A-surface side by calculating M3 = L1 - K1 and M4 = L2 - K2.

According to some embodiments, both surface sides of a conductive metal foil (e.g., copper foil) are coated with an active material to prepare an incoming material of an electrode plate (e.g., a negative electrode plate) in advance. The active material area is preferably symmetrical with respect to a center line in the width direction of the metal foil. The arrangement of the active material areas on both surface sides is preferably the same. The active material areas on both surface sides preferably have the same width and are both located in the middle area of the metal foil.

According to some embodiments, the method for manufacturing an electrode plate of a battery cell of the present application begins with S401.

According to some embodiments, in S402, a first tab and a second tab are respectively cut at the first edge and the second edge opposite to each other in the width direction perpendicular to the movement direction of the incoming material of the electrode plate.

According to some embodiments, in S403, the first image of the first surface of the incoming material of the electrode plate after the tab cutting is completed is acquired to determine a first set of dimensional parameters.

According to some embodiments, in S404, the incoming material of the electrode plate is slitted into the first electrode plate including the first edge and the second electrode plate including the second edge in the width direction of the incoming material of the electrode plate after the tab cutting is completed.

According to some embodiments, in S405, the second image of the second surface of the first electrode plate and the second electrode plate is acquired to determine a second set of dimensional parameters, the second surface being opposite to the first surface.

According to some embodiments, in S406, cutting positions of the first tabs and the second tabs are adjusted according to the first set of dimensional parameters and the second set of dimensional parameters.

According to some embodiments, in S407, slitting positions of the first electrode plate and the second electrode plate are adjusted according to the first set of dimensional parameters and the second set of dimensional parameters.

The method for manufacturing an electrode plate of a battery cell of the present application ends in S408.

According to some embodiments, the first surface and the second surface of the incoming material of the electrode plate each include, from the first edge to the second edge, a first metal film area, an active material area, and a second metal film area. The first set of dimensional parameters includes: a distance H_{A1} from a first boundary AP1 of the active material area on the first surface to a root AP2 of the first tab and a distance H_{A2} from a root AP5 of the second tab on the first surface to a second boundary AP4 of the active material area. The second set of dimensional parameters includes: a distance H_{B1} from a first boundary BP1 of the active material area on the second surface to a root BP2 of the first tab and a distance H_{B2} from a root BP5 of the second tab on the second surface to a second boundary BP4 of the active material area. Adjusting the cutting positions of the first tabs and the second tabs according to the first set of dimensional parameters and the second set of dimensional parameters includes: minimizing a difference between a sum of the distance HA1 and the distance N1 and a sum of the distance K2 and the distance N2 by adjusting the cutting positions of the tabs.

According to some embodiments, minimizing the difference between the sum of the distance H_{A1} and the distance H_{A2} and the sum of the distance H_{B1} and the distance H_{B2} by adjusting the cutting positions includes: determining a first deviation correction amount according to one quarter of the difference between the sum of the distance H_{A1} and the distance H_{A2} and the sum of the distance H_{B1} and the distance H_{B2}; and adjusting, by the first deviation correcting mechanism, the position of the incoming material of the electrode plate relative to the tab cutting part of the die cutting mechanism according to the first deviation correction amount.

According to some embodiments, the second set of dimensional parameters further includes: a distance M from a root of the tab on the second surface of the first electrode plate to a slitting and cutting track and a distance N from a root of the tab on the second surface of the second electrode plate to a slitting and cutting track. Adjusting the slitting positions of the first electrode plate and the second electrode plate according to the second set of dimensional parameters includes: minimizing the difference between the distance M from the root of the tab on the second surface of the first electrode plate to the slitting and cutting track and the distance N from the root of the tab on the second surface of the second electrode plate to the slitting and cutting track by adjusting the slitting positions of the electrode plates.

According to some embodiments, minimizing the difference between the distance M from the root of the tab on the second surface of the first electrode plate to the slitting and cutting track and the distance N from the root of the tab on the second surface of the second electrode plate to the slitting and cutting track by adjusting the slitting positions of the electrode plates includes: determining a second deviation correction amount according to one half of the difference between the distance M from the root of the tab on the second surface of the first electrode plate to the slitting and cutting track and the distance N from the root of the tab on the second surface of the second electrode plate to the slitting and cutting track; and adjusting, by the second deviation correcting mechanism, the position of the incoming material of the electrode plate relative to the slitting and cutting part of the slitting mechanism according to the second deviation correction amount.

According to some embodiments, the first visual detecting mechanism is controlled to acquire the first image at a first time; a movement time required for the incoming material of the electrode plate to move from a position corresponding to the first visual detecting mechanism to a position corresponding to the second visual detecting mechanism is determined; a second time is determined according to the first time and the movement time; and the second visual detecting mechanism is controlled to acquire the second image at the second time.

According to some embodiments, the first tabs R1 and the second tabs R2 are separately cut at the upper and lower portions of the electrode plate by a die cutting unit. For example, the die cutting unit may be a laser die cutting unit or any other suitable die cutting unit.

According to some embodiments, both sides (A-surface side and B-surface side shown in FIG. 3) of the electrode plate are detected by different visual detecting units.

For example, one or more of the following are detected on the first surface side (A-surface side) with the first visual detecting unit: the position of the first boundary AP1 of the active material area, the position of the rootAP2 of the first tab R1, the position of the root AP4 of the second tab R2, and the position of the second boundary AP5 of the active material area.

For example, one or more of the following are detected on the second surface side (B-surface side) with the second visual detecting unit: the position of the first boundary BP1 of the upper active material area, the position of the root BP2 of the first tab R1, the position of the slitting line BP3 between the first electrode plate and the second electrode plate, the position of the root BP4 of the second tab R2, and the position of the second boundary BP5 of the active material area.

According to some embodiments, the first visual detecting unit is upstream of the slitting unit, and the second visual detecting unit is downstream of the slitting unit. For example, the first visual detecting unit detects the electrode plate at a timing T1. The spatial position of the central point of the electrode plate area in the visual field of the first visual detecting unit is represented by P1. Preferably, the electrode plate moves at a uniform speed V. At a timing T2 after a lapse of a period ΔT, the second visual detecting unit detects the electrode plate. The spatial position of the central point of the electrode plate area in the visual field of the second visual detecting unit is represented by P2. A timing T1 at which the first visual detecting unit performs detection, a timing T2 at which the second visual detecting unit performs detection, a speed V at which the electrode plate moves, a spatial position P1 at a detection point of the first visual detecting unit, and a spatial position P2 at a detection point of the second visual detecting unit satisfy (T2 - T1) × V = (P2 - P1). Although it is illustrated that the detection point of the first visual detecting unit may be characterized by a central point of the field of view area of the first visual detecting unit, and the detection point of the second visual detecting unit may be characterized by a central point of the field of view area of the second visual detecting unit; however, the detection point of the first visual detecting unit and the detection point of the second visual detecting unit may be characterized by any other point defined in advance within their field of view. Such an arrangement is preferable for making the detection position of the first visual detecting unit on the electrode plate and the subsequent detection position of the second visual detecting unit on the electrode plate correspond to two opposite surfaces of the same position of the electrode plate.

The specific manner of enabling the detection position of the first visual detecting unit on the electrode plate and the subsequent detection position of the second visual detecting unit on the electrode plate to correspond to the two opposite surfaces of the same position of the electrode plate is not limited to the specific manner exemplified above. For the electrode plate used for a specific type of a battery cell, the number of tabs of the electrode plate, the dimension of the tabs of the electrode plate, the shape of the tabs of the electrode plate, and the distance between the respective tabs are preset. The speed at which the electrode plate moves during the manufacturing process is also preset. The incoming material of the electrode plate is marked with marks, and each mark indicates the end of an electrode plate for a previous battery cell and the beginning of an electrode plate for a next battery cell. Based on the detection of a mark and the time and the speed of movement of the electrode plate since a previous mark is detected, the position on the electrode plate corresponding to the detection point of the first visual detecting unit and the position on the electrode plate corresponding to the detection point of the second visual detecting unit at each moment can be expected, and the position on the electrode plate can be expressed, for example, as the distance from the recently detected mark or, for example, as the distance from the nearest tab that has just passed. Based on such a prejudgment, the detection timing of the first visual detecting unit and the detection timing of the second visual detecting unit can be set such that the detection position of the first visual detecting unit on the electrode plate and the subsequent detection position of the second visual detecting unit on the electrode plate correspond to two opposite surfaces of the same position of the electrode plate. For example, by satisfying (T2 - T1) × V = (P2 - P1) as above, the detection position of the first visual detecting unit on the electrode plate and the subsequent detection position of the second visual detecting unit on the electrode plate correspond to two opposite surfaces of the same position of the electrode plate.

According to some embodiments, the incoming material of the electrode plate is laminated materials, and the spacing between every two tabs is equal for one electrode plate. The mechanical tape travel distance of the first visual detecting unit and the second visual detecting unit is represented as K, the spacing between the tabs is represented as G, there are J tabs between the first visual detecting unit and the second visual detecting unit, and K/G is an integer = J. In such an exemplary case, the step height value calculated by the first visual detecting unit and the step height value calculated by the second visual detecting unit are staggered by J data, such that the deviation correction values for both A and B surfaces can be ensured to be corresponding to two opposite surfaces of the same position of the electrode plate.

According to some embodiments, the incoming material of the electrode plate is a wound material, and the dimension of the spacing between tabs gradually changes for one electrode plate. The design value of the distance between every two tabs of the electrode plate is different according to the model of the battery cell. Each battery cell type has a corresponding mark, and each mark indicates the end of an electrode plate for a previous battery cell and the beginning of an electrode plate for a next battery cell. Starting from each mark, each tab of the electrode plate may be numbered 1, 2, 3, ... in sequence until the next mark appears. In such an exemplary case, the first visual detecting unit and the second visual detecting unit may detect the height and/or the electrode width dimension of the step area corresponding to the respective tab number.

According to some embodiments, two deviation correcting units are arranged to respectively correct the deviation with respect to the difference between the step area of the first electrode plate and the step area of the second electrode plate and the difference between the electrode width dimension of the first electrode plate and the electrode width dimension of the second electrode plate.

For example, with the first deviation correcting unit, the difference between the step area of the first electrode plate and the step area of the second electrode plate is minimized through closed-loop feedback control based on the detection results of the first visual detecting unit and the second visual detecting unit. According to some embodiments, the first deviation correcting unit performs closed-loop feedback control with a part (e.g., one quarter) of the difference amount between the step area of the first electrode plate and the step area of the second electrode plate as a deviation correction amount Z to minimize the difference between the step area of the first electrode plate and the step area of the second electrode plate. Taking one quarter of the difference amount between the step area of the first electrode plate and the step area of the second electrode plate as the deviation correction amount Z is merely an example. In other embodiments, the deviation correction amount Z may also be, for example, 1/2 to 1/8 (e.g., 1/2, 1/3, 1/4, 1/5, 1/6, 1/7, or 1/8) of the difference amount between the step area of the first electrode plate and the step area of the second electrode plate.

For example, with the second deviation correcting unit, the difference between the electrode width dimension of the first electrode plate and the electrode width dimension of the second electrode plate is minimized through closed-loop feedback control based on the detection results of the first visual detecting unit and the second visual detecting unit. According to some embodiments, the second deviation correcting unit performs closed-loop feedback control with a part (e.g., one half) of the difference amount between the electrode width dimension of the first electrode plate and the electrode width dimension of the second electrode plate as a deviation correction amount W to minimize the difference between the electrode width dimension of the first electrode plate and the electrode width dimension of the second electrode plate. Taking one half of the difference amount between the electrode width dimension of the first electrode plate and the electrode width dimension of the second electrode plate as the deviation correction amount W is merely an example. In other embodiments, the deviation correction amount W may also be, for example, 1/8 to 6/8 (e.g., 1/8, 2/8 = 1/4, 3/8, 4/8 = 1/2, 5/8, or 6/8 = 3/4) of the difference amount between the electrode width dimension of the first electrode plate and the electrode width dimension of the second electrode plate.

According to some embodiments, based on the result of the detection on the first surface side of the electrode plate by the first visual detecting unit, a distance from the root AP2 of the first tab R1 to the root AP4 of the second tab R2 is represented as an electrode plate width L, a distance H_{A1} (a distance from AP1 to AP2) from the first boundary of the active material area on the first surface to the root of the first tab is represented as a width of the step area on the first edge side of the first surface, a distance H_{B1} (a distance from BP1 to BP2) from the first boundary of the active material area on the second surface to the root of the first tab is represented as a width of the step area on the first edge side of the second surface, a distance H_{A2} (a distance from AP4 to AP5) from the second boundary of the active material area on the first surface to the root of the second tab is represented as a width of the step area on the second edge side of the first surface, and a distance H_{B2} (a distance from BP4 to BP5) from the second boundary of the active material area on the second surface to the root of the second tab is represented as a width of the step area on the second edge side of the second surface.

According to some embodiments, based on the result of the detection on the second surface side of the electrode plate by the second visual detecting unit, the width M of the first electrode plate is represented as the distance from the root BP2 of the first tab R1 to the slitting line BP3 between the first electrode plate and the second electrode plate, and the width N of the second electrode plate is represented as the distance from the slitting line BP3 between the first electrode plate and the second electrode plate to the root BP4 of the second tab R2.

According to some embodiments, the first deviation correcting unit performs closed-loop feedback control on the position of the electrode plate in the width direction based on the deviation correction amount Z = ((H_{A1} + H_{B1}) - (H_{A2} + H_{B2}))/4. The deviation correction amount Z = ((H_{A1} + H_{B1}) - (H_{A2} + H_{B2}))/4 characterizes one quarter of the difference amount between the step area of the first electrode plate and the step area of the second electrode plate.

According to some embodiments, the second deviation correcting unit performs closed-loop feedback control on the position of the electrode plate in the width direction based on the deviation correction amount W = (M-N)/2. The deviation correction amount W = (M-N)/2 characterizes one half of the difference amount between the electrode width dimension of the first electrode plate and the electrode width dimension of the second electrode plate. Since the electrode plate has not been slitted and cut into the first electrode plate and the second electrode plate at the time when the first visual detecting unit detects A-surface side of the electrode plate, the first visual detecting unit cannot detect the electrode width dimension of the first electrode plate and the electrode width dimension of the second electrode plate. In an ideal case where manufacturing errors are excluded, A-surface side and B-surface side of the electrode plate have the identical structure, and the first electrode plate and the second electrode plate obtained by slitting and cutting also have the identical structure (up-down symmetry).

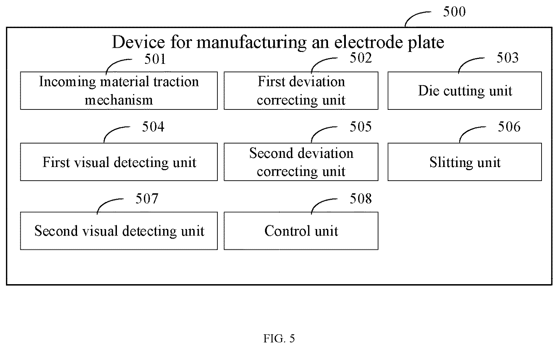

Referring to FIG. 5, FIG. 5 is a schematic structural diagram of a device for manufacturing an electrode plate according to some embodiments of the present application.

According to some embodiments, the device 500 for manufacturing an electrode plate of the present disclosure includes: an incoming material traction unit 501, a first deviation correcting unit 502 and a second deviation correcting unit 505, a die cutting unit 503 and a slitting unit 506, a first visual detecting unit 504 and a second visual detecting unit 507, and a control unit 508.

According to some embodiments, the first deviation correcting unit 502, the die cutting unit 503, the first visual detecting unit 504, the second deviation correcting unit 505, the slitting unit 506, and the second visual detecting unit 507 are disposed in sequence with respect to the movement direction of the electrode plate from upstream to downstream. The movement of the electrode plate from upstream to downstream is preferably uniform.

According to some embodiments, the first visual detecting unit 504 is used to detect the following on the first surface side of the electrode plate (e.g., a positive electrode plate): the position of the root AP1 of the first tab R1 on the first surface side, the position of the boundary line AP2 between the upper insulating material area and the active material area on the first surface side, the position of the boundary line AP4 between the active material area and the lower insulating material area on the first surface side, and the position of the root AP5 of the second tab R2 on the first surface side. The position of the root AP1 of the first tab R1 corresponds to the extension line of the root of each tab in the length direction of the upper electrode plate. The boundary line between the upper insulating material area and the active material area is represented as AP2. The boundary line between the active material area and the lower insulating material area is represented as AP4. The position of the root AP5 of the second tab R2 corresponds to the extension line of the root of each tab in the length direction of the lower electrode plate. At the detection point of the first visual detecting unit 504, the electrode plate has not been slitted. Therefore, the first visual detecting unit 504 does not detect the slitting line.

According to some embodiments, the position of the root AP1 of the first tab R1 and the position of the root AP5 of the second tab R2 may be determined based on the result of the detection on the first surface side by the first visual detecting unit, for example, based on the position of the bottom of a recessed portion between the tabs. For example, the position of the boundary line AP2 between the upper insulating material area and the active material area and the position of the boundary line AP4 between the active material area and the lower insulating material area may be determined based on the difference in color between the active material area and the lower insulating material area.

Based on the result of the detection on the first surface side by the first visual detecting unit, the distance from the root AP1 of the first tab R1 to the root AP5 of the second tab R2 (the distance corresponds to the electrode plate width) may be represented as an electrode plate width L, the distance from the root AP1 of the first tab R1 to the boundary line AP2 between the upper insulating material area and the upper active material area may be represented as K1 (i.e., an upper AT width K1 on A-surface side), the distance from the boundary line AP2 between the upper insulating material area and the upper active material area to the boundary line AP4 between the lower active material area and the lower insulating material area may be represented as a width M of the active material area (i.e., a film width M on A-surface side), and the distance from the root AP5 of the second tab R2 to the boundary line AP4 between the active material area and the lower insulating material area may be represented as K2 (i.e., a lower AT width K2 on A-surface side). These values satisfy the relationship of L = K1 + M + K2, that is, the electrode plate width L = upper AT width K1 on A-surface side + film width M on A-surface side + lower AT film width K2 on A-surface side.

According to some embodiments, the electrode plate width L seen from the first surface side is equal to the electrode plate width L seen from the second surface side, and the film width M seen from the first surface side is equal to the film width M seen from the second surface side.

According to some embodiments, the second visual detecting unit is used to detect the following on the second surface side: the position of the root BP1 of the first tab R1 on the second surface side, the position of the boundary line BP2 between the upper insulating material area and the upper active material area on the second surface side, the position P3 of the slitting line P3 between the first electrode plate and the second electrode plate on the second surface side, the position of the boundary line BP4 between the lower active material area and the lower insulating material area on the second surface side, and the position of the root BP5 of the second tab R2 on the second surface side.

Based on the result of the detection on the second surface side by the second visual detecting unit, the distance from the root BP1 of the first tab R1 to the slitting line P3 between the first electrode plate and the second electrode plate may be represented as the width L1 of the first electrode tab (i.e., an upper electrode width L1 on B-surface side), the distance from the slitting line P3 between the first electrode plate and the second electrode plate to the root BP5 of the second tab R2 may be represented as the width L2 of the second electrode plate (i.e., a lower electrode width L2 on B-surface side), the distance from the boundary line BP2 between the upper insulating material area and the upper active material area to the slitting line P3 between the first electrode plate and the second electrode plate may be represented as the width M1 of the upper active material area (i.e., an upper film width M1 on B-surface side), the distance from the slitting line P3 between the first electrode plate and the second electrode plate to the boundary line AP4 between the lower active material area and the lower insulating material area may be represented as the width M2 of the lower active material area (i.e., a lower film width M2 on B-surface side), the width from the root BP1 of the first tab R1 to the boundary line BP2 between the upper insulating material area and the upper active material area is represented as N1 (i.e., an upper AT width N1 on B-surface side), and the distance from the boundary line BP4 between the lower active material area and the lower insulating material area to the root BP5 of the second tab R2 is represented as N2 (i.e., a lower AT width N2 on B-surface side). These values satisfy the relationships of L1 = M1 + N1 and L2 = M2 + N2. That is, the upper electrode width L1 on B-surface side = the upper film width M1 on B-surface side + the upper AT width N1 on B-surface side, and the lower electrode width L2 on B-surface side = the lower film width M2 on B-surface side + the lower AT width N2 on B-surface side.

According to some embodiments, the first deviation correcting unit performs closed-loop feedback control on the position of the electrode plate in the width direction based on the deviation correction amount E = ((K1 + N1) - (K2 + N2))/4. The deviation correction amount E of the first deviation correcting unit is obtained by calculating ((K1 + N1) - (K2 + N2))/4 based on the detection results of the first visual detecting unit and the second visual detecting unit, and ((K1 + N1) - (K2 + N2))/4 characterizes one quarter of the difference amount between the insulating material area of the first electrode plate and the insulating material area of the second electrode plate.

According to some embodiments, the second deviation correcting unit performs closed-loop feedback control on the position of the electrode plate in the width direction based on the deviation correction amount F = ((M1 + M3) - (M2 + M4))/4, where M3 = L1 -K1 and M4 = L2 - K2. The deviation correction amount F of the second deviation correcting unit is obtained by calculating ((M1 + M3) - (M2 + M4))/4 based on the detection results of the first visual detecting unit and the second visual detecting unit, and ((M1 + M3) - (M2 + M4))/4 characterizes one quarter of the difference amount between the active material area of the first electrode plate and the active material area of the second electrode plate.

According to some embodiments, a timing T1 at which the first visual detecting unit performs detection, a timing T2 at which the second visual detecting unit performs detection, a speed V at which the electrode plate moves, a spatial position P1 at a detection point of the first visual detecting unit, and a spatial position P2 at a detection point of the second visual detecting unit satisfy (T2 - T1) × V = (P2 - P1). Such an arrangement makes the detection position of the first visual detecting unit on the electrode plate and the subsequent detection position of the second visual detecting unit on the electrode plate correspond to two opposite surfaces of the same position of the electrode plate.

For the electrode plate used for a specific type of a battery cell, the number of tabs of the electrode plate, the dimension of the tabs of the electrode plate, the shape of the tabs of the electrode plate, and the distance between the respective tabs are preset.

According to some embodiments, two deviation correcting units are arranged to dynamically correct the position of the electrode plate in the width direction. The first deviation correcting unit of the two deviation correcting units is upstream of the second deviation correcting unit. The first deviation correcting unit performs closed-loop feedback control to minimize the difference between the insulating material area of the first electrode plate and the insulating material area of the second electrode plate based on the detection results of the first visual detecting unit and the second visual detecting unit, such that the difference amount between the insulating material area of the first electrode plate and the insulating material area of the second electrode plate is as close to 0 as possible. The second deviation correcting unit performs closed-loop feedback control to minimize the difference between the active material area of the first electrode plate and the active material area of the second electrode plate based on the detection results of the first visual detecting unit and the second visual detecting unit, such that the difference amount between the active material area of the first electrode plate and the active material area of the second electrode plate is as close to 0 as possible.

According to some embodiments, the first visual detecting unit 504 is used to detect the following on the first surface side of the electrode plate (e.g., a negative electrode plate): the position of the first boundary AP1 of the active material area on the first surface side, the position of the root AP2 of the first tab R1 on the first surface side, the position of the root AP4 of the second tab R2 on the first surface side, and the position of the second boundary AP5 of the active material area on the first surface side. The position of the root AP2 of the first tab R1 corresponds to the extension line of the root of each tab in the length direction of the upper electrode plate. The position of the root AP4 of the second tab R2 corresponds to the extension line of the root of each tab in the length direction of the lower electrode plate. At the detection point of the first visual detecting unit 504, the electrode plate has not been slitted. Therefore, the first visual detecting unit 504 does not detect the slitting line.

According to some embodiments, the position of the rootAP2 of the first tab R1 and the position of the root AP4 of the second tab R2 may be determined based on the result of the detection on the first surface side by the first visual detecting unit, for example, based on the position of the bottom of a recessed portion between the tabs. For example, the position of the first boundary AP1 of the active material area on the first surface side and the position of the second boundary AP5 of the active material area on the first surface side may be determined based on the difference in color between the active material area and the metal foil.

Based on the result of the detection on the first surface side by the first visual detecting unit, the distance from the root AP2 of the first tab R1 to the root AP4 of the second tab R2 (the distance corresponds to the electrode plate width) may be represented as the electrode plate width L. The active material area covers a partial area of the tabs. The partial area of the tabs covered with the active material is referred to as a step area. A distance H_{A1} (a distance from AP1 to AP2) from the first boundary of the active material area on the first surface to the root of the first tab is represented as a width of the step area on the first edge side of the first surface, a distance H_{B1} (a distance from BP1 to BP2) from the first boundary of the active material area on the second surface to the root of the first tab is represented as a width of the step area on the first edge side of the second surface, a distance H_{A2} (a distance from AP4 to AP5) from the second boundary of the active material area on the first surface to the root of the second tab is represented as a width of the step area on the second edge side of the first surface, and a distance H_{B2} (a distance from BP4 to BP5) from the second boundary of the active material area on the second surface to the root of the second tab is represented as a width of the step area on the second edge side of the second surface.

According to some embodiments, the electrode plate width L seen from the first surface side is equal to the electrode plate width L seen from the second surface side, and the active material area width seen from the first surface side is equal to the active material area width seen from the second surface side.

According to some embodiments, the second visual detecting unit is used to detect the following on the second surface side: the distance M from the root BP2 of the tab on the second surface of the first electrode plate to the slitting and cutting track BP3, and the distance N from the root BP4 of the tab on the second surface of the second electrode plate to the slitting and cutting track BP3. The distance M from the root BP2 of the tab on the second surface of the first electrode plate to the slitting and cutting track BP3 represents the width of the first electrode plate. The distance N from the root BP4 of the tab on the second surface of the second electrode plate to the slitting and cutting track BP3 represents the width of the second electrode plate.

Based on the result of the detection on the second surface side by the second visual detecting unit, the distance from the root BP2 of the tab on the second surface of the first electrode plate to the slitting and cutting track BP3 may be represented as M, and the distance from the root BP4 of the tab on the second surface of the second electrode plate to the slitting and cutting track BP3 may be represented as N.

According to some embodiments, the first deviation correcting unit performs closed-loop feedback control on the position of the electrode plate in the width direction based on the deviation correction amount Z = ((H_{A1} + H_{B1}) - (H_{A2} + H_{B2}))/4. The deviation correction amount Z of the first deviation correcting unit is obtained by calculating ((HA1 + HB1) - (HA2 + HB2))/4 based on the detection results of the first visual detecting unit and the second visual detecting unit, and ((HA1 + HB1) - (HA2 + HB2))/4 characterizes one quarter of the difference amount between the step area of the first electrode plate and the step area of the second electrode plate.

According to some embodiments, the second deviation correcting unit performs closed-loop feedback control on the position of the electrode plate in the width direction based on the deviation correction amount W = (M-N)/2. The deviation correction amount W of the second deviation correcting unit is obtained by calculating (M - N)/2 based on the detection result of the second visual detecting unit, and (M - N)/2 characterizes one half of the difference amount between the electrode width dimension of the first electrode plate and the electrode width dimension of the second electrode plate.

According to some embodiments, a timing T1 at which the first visual detecting unit performs detection, a timing T2 at which the second visual detecting unit performs detection, a speed V at which the electrode plate moves, a spatial position P1 at a detection point of the first visual detecting unit, and a spatial position P2 at a detection point of the second visual detecting unit satisfy (T2 - T1) × V = (P2 - P1). Such an arrangement makes the detection position of the first visual detecting unit on the electrode plate and the subsequent detection position of the second visual detecting unit on the electrode plate correspond to two opposite surfaces of the same position of the electrode plate.

For the electrode plate used for a specific type of a battery cell, the number of tabs of the electrode plate, the dimension of the tabs of the electrode plate, the shape of the tabs of the electrode plate, and the distance between the respective tabs are preset.

According to some embodiments, two deviation correcting units are arranged to dynamically correct the position of the electrode plate in the width direction. The first deviation correcting unit of the two deviation correcting units is upstream of the second deviation correcting unit. The first deviation correcting unit performs closed-loop feedback control to minimize the difference between the step area of the first electrode plate and the step area of the second electrode plate based on the detection results of the first visual detecting unit and the second visual detecting unit, such that the difference amount between the step area of the first electrode plate and the step area of the second electrode plate is as close to 0 as possible. The second deviation correcting unit performs closed-loop feedback control to minimize the difference between the electrode width dimension of the first electrode plate and the electrode width dimension of the second electrode plate based on the detection result of the second visual detecting unit, such that the difference amount between the electrode width dimension of the first electrode plate and the electrode width dimension of the second electrode plate is as close to 0 as possible.

In order to minimize the manufacturing errors of the electrode plate, the present disclosure exemplarily describes the various embodiments described above. The present disclosure minimizes the manufacturing errors of the electrode plate by, for example, minimizing the difference between the insulating material area of the first electrode plate and the insulating material area of the second electrode plate, or minimizing the difference between the active material area of the first electrode plate and the active material area of the second electrode plate in a closed-loop feedback control manner.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A device for manufacturing an electrode plate of a battery cell, the device comprising:
an incoming material traction mechanism, configured to guide an incoming material of the electrode plate to move from upstream to downstream according to a processing direction, the incoming material of the electrode plate is provided with a first edge and a second edge in a width direction perpendicular to a movement direction of the incoming material of the electrode plate;
wherein, the device is further sequentially provided with the following components from upstream to downstream according to the movement direction of the incoming material of the electrode plate:
a first deviation correcting mechanism, configured to adjust a position of the incoming material of the electrode plate relative to a tab cutting part of a die cutting mechanism in the width direction;
the die cutting mechanism, comprising the tab cutting part configured to cut tabs on the incoming material of the electrode plate;
a first visual detecting mechanism, configured to acquire a first image of a first surface of the incoming material of the electrode plate after the tabs are cut;
a second deviation correcting mechanism, configured to adjust a position of the incoming material of the electrode plate relative to a slitting and cutting part of a slitting mechanism in the width direction;
the slitting mechanism, comprising the slitting and cutting part configured to slit and cut the incoming material of the electrode plate into a first electrode plate and a second electrode plate, the first electrode plate comprising the first edge, and the second electrode plate comprising the second edge;
a second visual detecting mechanism, configured to acquire a second image of a second surface of the first electrode plate and the second electrode plate opposite to the first surface; and
a control unit, configured to control the first deviation correcting mechanism and the second deviation correcting mechanism according to the first image and the second image.

2. The device for manufacturing an electrode plate of a battery cell according to claim 1, wherein
the control unit is configured to control the first deviation correcting mechanism through closed-loop feedback according to the first image and the second image so as to minimize a difference between an insulating material area of the first electrode plate and an insulating material area of the second electrode plate;
the control unit is configured to control the second deviation correcting mechanism through closed-loop feedback according to the first image and the second image so as to minimize a difference between an active material area of the first electrode plate and an active material area of the second electrode plate; and
the first electrode plate and the second electrode plate are suitable for being used as a positive electrode plate of a battery cell.

3. The device for manufacturing an electrode plate of a battery cell according to claim 2, wherein
the control unit is configured to determine a first deviation correction amount according to the difference amount between the insulating material area of the first electrode plate and the insulating material area of the second electrode plate, and
the first deviation correcting mechanism adjusts the position of the incoming material of the electrode plate relative to the tab cutting part of the die cutting mechanism according to the first deviation correction amount.

4. The device for manufacturing an electrode plate of a battery cell according to claim 2, wherein
the control unit is configured to determine a second deviation correction amount according to the difference amount between the active material area of the first electrode plate and the active material area of the second electrode plate, and
the second deviation correcting mechanism adjusts the position of the incoming material of the electrode plate relative to the slitting and cutting part of the slitting mechanism according to the second deviation correction amount.

5. The device for manufacturing an electrode plate of a battery cell according to claim 2, wherein
the first surface and the second surface of the incoming material of the electrode plate each comprise, from the first edge to the second edge, a first metal film area, a first insulating material area, the active material area, a second insulating material area, and a second metal film area;
the tab cutting part comprises: a first cutting head configured to cut first tabs in the first metal film area and the first insulating material area; and a second cutting head configured to cut second tabs in the second metal film area and the second insulating material area, and
the control unit is further configured to:
determine, according to the first image and the second image, a distance K1 from a root of the first tab on the first surface to the active material area, a distance N1 from a root of the first tab on the second surface to the active material area, a distance K2 from a root of the second tab on the first surface to the active material area, and a distance N2 from a root of the second tab on the second surface to the active material area, and
control the first deviation correcting mechanism to adjust a position of the incoming material of the electrode plate relative to the first cutting head and the second cutting head in the width direction so as to minimize a difference between a sum of the distance K1 and the distance N1 and a sum of the distance K2 and the distance N2.

6. The device for manufacturing an electrode plate of a battery cell according to claim 2, wherein
the control unit is further configured to:
determine, according to the first image and the second image, a width M3 of an active material area of the first surface of the first electrode plate, a width M4 of an active material area of the first surface of the second electrode plate, a width M1 of an active material area of the second surface of the first electrode plate, and a width M2 of an active material area of the second surface of the second electrode plate, and
control the second deviation correcting mechanism to adjust the position of the incoming material of the electrode plate relative to the slitting and cutting part in the width direction so as to minimize a difference between a sum of the width M3 and the width M1 and a sum of the width M4 and the width M2.

7. The device for manufacturing an electrode plate of a battery cell according to claim 1, wherein
the control unit is configured to control the first deviation correcting mechanism through closed-loop feedback according to the first image and the second image so as to minimize a difference between a step area where the tab of the first electrode plate overlaps with an active material area and a step area where the tab of the second electrode plate overlaps with an active material area;
the control unit is configured to control the second deviation correcting mechanism through closed-loop feedback according to the first image and the second image so as to minimize a difference between a width of the first electrode plate and a width of the second electrode plate; and
the first electrode plate and the second electrode plate are suitable for being used as a negative electrode plate of a battery cell.

8. The device for manufacturing an electrode plate of a battery cell according to claim 7, wherein
the control unit is configured to determine a first deviation correction amount according to the difference amount between the step area of the first electrode plate and the step area of the second electrode plate, and
the first deviation correcting mechanism adjusts the position of the incoming material of the electrode plate relative to the tab cutting part of the die cutting mechanism according to the first deviation correction amount.

9. The device for manufacturing an electrode plate of a battery cell according to claim 7, wherein
the control unit is configured to determine a second deviation correction amount according to the difference amount between the width of the first electrode plate and the width of the second electrode plate, and
the second deviation correcting mechanism adjusts the position of the incoming material of the electrode plate relative to the slitting and cutting part of the slitting mechanism according to the second deviation correction amount.

10. The device for manufacturing an electrode plate of a battery cell according to claim 7, wherein
the first surface and the second surface of the incoming material of the electrode plate each comprise, from the first edge to the second edge, a first metal film area, the active material area, and a second metal film area;
the tab cutting part comprises: a first cutting head configured to cut first tabs in the first metal film area and the active material areas; and a second cutting head configured to cut second tabs in the second metal film area and the active material areas, and
the control unit is further configured to:
determine, according to the first image and the second image, a distance H_{A1} from a boundary of the active material area on the first surface proximal to the first edge to a root of the first tab, a distance H_{A2} from a boundary of the active material area on the first surface proximal to the second edge to a root of the second tab, a distance H_{B1} from a boundary of the active material area on the second surface proximal to the first edge to a root of the first tab, and a distance H_{B2} from a boundary of the active material area on the second surface proximal to the second edge to a root of the second tab, and
control the first deviation correcting mechanism to adjust position of the incoming material of the electrode plate relative to the first cutting head and the second cutting head in the width direction so as to minimize a difference between a sum of the distance H_{A1} and the distance H_{B1} and a sum of the distance H_{A2} and the distance H_{B2}.

11. The device for manufacturing an electrode plate of a battery cell according to claim 7, wherein
the control unit is further configured to:
determine, according to the second image, a distance M from a root of the tab on the second surface of the first electrode plate to a slitting and cutting track and a distance N from a root of the tab on the second surface of the second electrode plate to a slitting and cutting track, and
control the second deviation correcting mechanism to adjust the position of the incoming material of the electrode plate relative to the slitting and cutting part in the width direction so as to minimize a difference between the distance M and the distance N.

12. The device for manufacturing an electrode plate of a battery cell according to any one of claims 1 to 11, wherein a timing at which the first visual detecting mechanism acquires the first image, a timing at which the second visual detecting mechanism acquires the second image, and the setting of a moving speed of the incoming material of the electrode plate makes a detection point of the first visual detecting mechanism and a detection point of the second visual detecting mechanism correspond to two opposite surfaces of a same position on the incoming material of the electrode plate.

13. A method for manufacturing an electrode plate of a battery cell, applied to the device for manufacturing an electrode plate of a battery cell according to claim 1, the method comprising:
respectively cutting first tabs and second tabs at the first edge and the second edge opposite to each other in the width direction perpendicular to the movement direction of the incoming material of the electrode plate;
acquiring the first image of the first surface of the incoming material of the electrode plate after the tab cutting is completed to determine a first set of dimensional parameters;
slitting the incoming material of the electrode plate into the first electrode plate comprising the first edge and the second electrode plate comprising the second edge in the width direction of the incoming material of the electrode plate after the tab cutting is completed;
acquiring the second image of the second surface of the first electrode plate and the second electrode plate to determine a second set of dimensional parameters, the second surface being opposite to the first surface;
adjusting cutting positions of the first tabs and the second tabs according to the first set of dimensional parameters and the second set of dimensional parameters; and
adjusting slitting positions of the first electrode plate and the second electrode plate according to the first set of dimensional parameters and the second set of dimensional parameters.

14. The method for manufacturing an electrode plate of a battery cell according to claim 13, wherein
the first surface and the second surface of the incoming material of the electrode plate each comprise, from the first edge to the second edge, a first metal film area, a first insulating material area, an active material area, a second insulating material area, and a second metal film area;
the first set of dimensional parameters comprises: a distance K1 from a root of the first tab on the first surface to the active material area and a distance K2 from a root of the second tab on the first surface to the active material area;
the second set of dimensional parameters comprises: a distance N1 from a root of the first tab on the second surface to the active material area and a distance N2 from a root of the second tab on the second surface to the active material area;
adjusting the cutting positions of the first tabs and the second tabs according to the first set of dimensional parameters and the second set of dimensional parameters comprises: minimizing a difference between a sum of the distance K1 and the distance N1 and a sum of the distance K2 and the distance N2 by adjusting the cutting positions; and
the first electrode plate and the second electrode plate are suitable for being used as a positive electrode plate of a battery cell.

15. The method for manufacturing an electrode plate of a battery cell according to claim 14, wherein minimizing the difference between the sum of the distance K1 and the distance N1 and the sum of the distance K2 and the distance N2 by adjusting the cutting positions comprises:
determining a first deviation correction amount according to one quarter of the difference between the sum of the distance K1 and the distance N1 and the sum of the distance K2 and the distance N2; and
adjusting, by the first deviation correcting mechanism, the position of the incoming material of the electrode plate relative to the tab cutting part of the die cutting mechanism according to the first deviation correction amount.

16. The method for manufacturing an electrode plate of a battery cell according to claim 14, wherein
the second set of dimensional parameters further comprises: a width M1 of an active material area of the second surface of the first electrode plate, a width M2 of an active material area of the second surface of the second electrode plate, an electrode width L1 of the second surface of the first electrode plate, and an electrode width L2 of the second surface of the second electrode plate, and
adjusting the slitting positions of the first electrode plate and the second electrode plate according to the first set of dimensional parameters and the second set of dimensional parameters comprises:
determining a width M3 of an active material area of the first surface of the first electrode plate according to a difference value obtained by subtracting K1 from L1;
determining a width M4 of an active material area of the first surface of the second electrode plate according to a difference value obtained by subtracting K2 from L2; and
minimizing a difference between a sum of the width M3 and the width M1 and a sum of the width M4 and the width M2 by adjusting the slitting positions.

17. The method for manufacturing an electrode plate of a battery cell according to claim 16, wherein minimizing the difference between the sum of the width M3 and the width M1 and the sum of the width M4 and the width M2 by adjusting the slitting positions comprises:
determining a second deviation correction amount according to one quarter of the difference between the sum of the width M3 and the width M1 and the sum of the width M4 and the width M2; and
adjusting, by the second deviation correcting mechanism, the position of the incoming material of the electrode plate relative to the slitting and cutting part of the slitting mechanism according to the second deviation correction amount.

18. The method for manufacturing an electrode plate of a battery cell according to claim 13, wherein
the first surface and the second surface of the incoming material of the electrode plate each comprise, from the first edge to the second edge, a first metal film area, an active material area, and a second metal film area;
the first set of dimensional parameters comprises: a distance H_{A1} from a boundary of the active material area on the first surface proximal to the first edge to a root of the first tab and a distance H_{A2} from a boundary of the active material area on the first surface proximal to the second edge to a root of the second tab;
the second set of dimensional parameters comprises: a distance H_{B1} from a boundary of the active material area on the second surface proximal to the first edge to a root of the first tab, and a distance H_{B2} from a boundary of the active material area on the second surface proximal to the second edge to a root of the second tab;
adjusting the cutting positions of the first tabs and the second tabs according to the first set of dimensional parameters and the second set of dimensional parameters comprises: minimizing a difference between a sum of the distance H_{A1} and the distance H_{B1} and a sum of the distance H_{A2} and the distance H_{B2} by adjusting the cutting positions; and
the first electrode plate and the second electrode plate are suitable for being used as a negative electrode plate of a battery cell.

19. The method for manufacturing an electrode plate of a battery cell according to claim 18, wherein minimizing the difference between the sum of the distance H_{A1} and the distance H_{B1} and the sum of the distance H_{A2} and the distance H_{B2} by adjusting the cutting positions comprises:
determining a first deviation correction amount according to one quarter of the difference between the sum of the distance H_{A1} and the distance H_{B1} and the sum of the distance H_{A2} and the distance H_{B2}; and
adjusting, by the first deviation correcting mechanism, the position of the incoming material of the electrode plate relative to the tab cutting part of the die cutting mechanism according to the first deviation correction amount.

20. The method for manufacturing an electrode plate of a battery cell according to claim 18, wherein
the second set of dimensional parameters further comprises: a distance M from a root of the tab on the second surface of the first electrode plate to a slitting and cutting track and a distance N from a root of the tab on the second surface of the second electrode plate to a slitting and cutting track, and
adjusting the slitting positions of the first electrode plate and the second electrode plate according to the first set of dimensional parameters and the second set of dimensional parameters comprises:
minimizing a difference between the distance M and the distance N by adjusting the slitting positions.

21. The method for manufacturing an electrode plate of a battery cell according to claim 20, wherein minimizing the difference between the distance M and the distance N by adjusting the slitting positions comprises:
determining a second deviation correction amount according to one half of the difference between the distance M and the distance N; and
adjusting, by the second deviation correcting mechanism, the position of the incoming material of the electrode plate relative to the slitting and cutting part of the slitting mechanism according to the second deviation correction amount.

22. The method for manufacturing an electrode plate of a battery cell according to any one of claims 13-21, further comprising:
controlling the first visual detecting mechanism to acquire the first image at a first time;
determining a movement time required for the incoming material of the electrode plate to move from a position corresponding to the first visual detecting mechanism to a position corresponding to the second visual detecting mechanism;
determining a second time according to the first time and the movement time; and
controlling the second visual detecting mechanism to acquire the second image at the second time.
